# EUROPEAN PATENT SPECIFICATION

(11) **EP 4 012 553 B1**
(45) Date of publication and mention of the grant of the patent: **06.03.2024**
(21) Application number: 21198375.4
(22) Date of filing: 22.09.2021
(51) Int. Cl.: G06F 8/656, G06F 9/48, G06F 12/06, G06F 12/14

(54) **SECURE AND EFFICIENT MICROCODE(UCODE) HOT-UPGRADE FOR BARE METAL CLOUD**
SICHERES UND EFFIZIENTES HOT-UPGRADE VON MIKROCODE (UCODE) FÜR BARE-METAL-CLOUD
MISE À NIVEAU À CHAUD DE MICROCODE (UCODE) SÉCURISÉE ET EFFICACE POUR NUAGE SANS SYSTÈME D'EXPLOITATION

(30) Priority: 11.12.2020 US 202017120072
(43) Date of publication of application: 15.06.2022
(73) Proprietor: INTEL Corporation, Santa Clara, CA 95054 (US)
(72) Inventor: JAYAKUMAR, Sarathy, Portland, 97229 (US); SONG, Chuan, ShangHai 31, 201615 (CN); KUMAR, Mohan J., Aloha, 97007 (US)
(74) Representative: 2SPL Patentanwälte PartG mbB

(56) References cited:
- US-A1- 2020 285 461
- Ben Hawkes: "Notes on Intel Microcode Updates", , 1 March 2013 (2013-03-01), pages 1-11, XP055892948, Retrieved from the Internet: URL:http://inertiawar.com/microcode/hawkes _intel_microcode.pdf [retrieved on 2022-02-17]

## Description

### BACKGROUND INFORMATION

The use of cloud-hosted services and applications has exploded in the past decade and continues to grow at an exponential rate. Cloud-hosted services and applications are generally implemented in large data centers housing thousands of compute platforms such as servers, blade servers, server modules, micro-servers, *etc.* Oftentimes, the platforms are configured as virtualized execution used for hosting virtual machines and "containers" or the like in which software applications are run.

Each platform includes physical hardware, firmware (also referred to as BIOS - Basic Input-Output System), and software. The root of trust for the platform is the platform hardware and firmware, which although less susceptible to malicious actors that software still may pose a risk. For security and other reasons (*e.g.*, performance), platform firmware may need to be updated.

Historically, the BIOS in personal computer (PC) platforms was a monolithic block of code that was installed in Read-Only Memory (ROM), wherein BIOS was updated by replacing the BIOS ROM chip. Subsequently, the BIOS was installed in EEPROM (Electrically Erasable Programmable Read-Only Memory) and could be replaced (in its entirely) via a firmware update. In approximately 1998, Intel^{®} Corporation began development of a modular firmware architecture known as the Extensible Firmware Interface (EFI). In 2005, the Unified EFI forum was formed as an industry-wide organization to promote adoption and continue the development of the EFI Specification. Using the EFI 1.10 Specification as the starting point, this industry group released began releasing firmware specifications, renamed Unified EFI (LTEFI). UEFI firmware dominates today's platform architectures. UEFI firmware has a modular architecture that includes a core block to which modules are added, wherein the core block is booted first and the booted code is used to load the modules during platform boot. Also, rather than EEPROMs, most of today's firmware is stored in flash memory (sometimes referred to as BIOS flash and referred to as persistent flash memory). More generally, platform firmware may be stored in a non-volatile storage device, which includes but is not limited to flash memory and EEPROMs.

Under some platform architectures, bootloaders may be used to load platform firmware. For example, bootloaders are used for mobile devices and some server platforms.

Traditionally, the uCode updates can be loaded into CPU (central processing unit, *aka* processor) either by boot time loading (if the uCode update corresponds to pre-boot uCode that is loaded prior to booting an operating system) or by operating system execution time loading (referred to as a hot-upgrade or run-time uCode update). Cloud environments are sensitive to system downtime caused by system firmware upgrades and the cloud service providers prefer the hot-upgrade method to load uCode patch through operating system utility in runtime if the uCode update does not have dependencies to the boot phase of platform hardware and operating system.

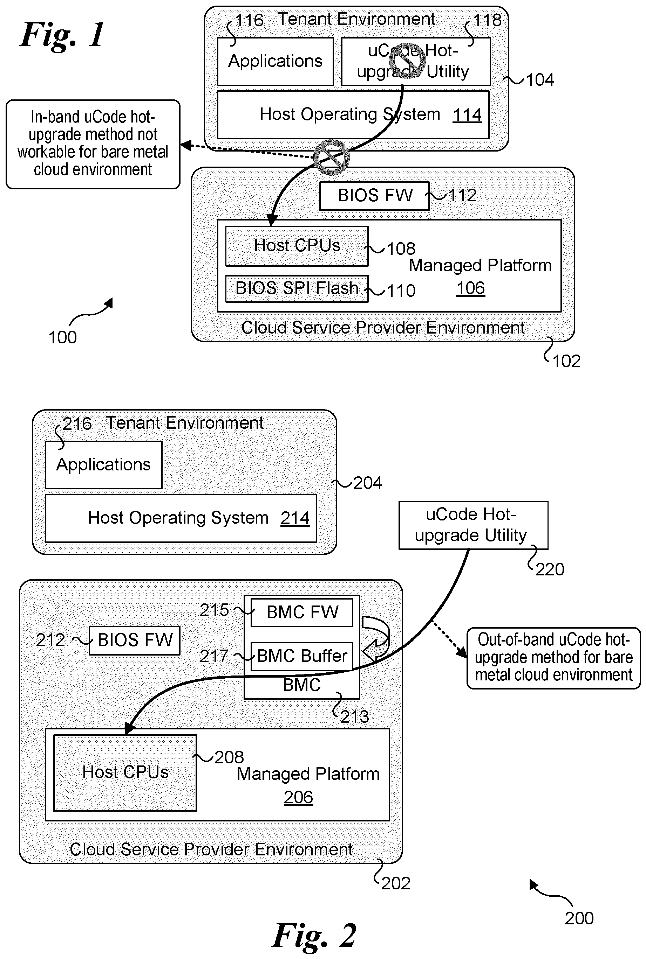

Cloud service providers provide a variety options for tenants, including virtualized environments under which the service provider provides an operating system and hypervisor or VMM (virtual machine monitor) on which tenant-managed virtual machines (VMs) are run and "bare" metal platforms under which the cloud service provider leases the hardware on which tenant VMs are run without a host operating system provided by the service provider. An example of a bare metal cloud environment 100 is shown in Figure 1, which includes a cloud service provider environment 102 and a tenant environment 104. Cloud service provider environment 102 includes a managed platform 106 including one or more host CPUs 108 and BIOS SPI (Serial Peripheral Interface) flash 110. Cloud service provider environment 102 also includes BIOS firmware (FW) 112.

Tenant environment 104 includes a host operating system 114 on which one or more applications 116 are run. For illustrative purposes, tenant environment is further depicted as including a uCode hot-upgrade utility 118 that would be used to support uCode hot-upgrades during operating run-time for a virtual environment that was not bare metal. Under bare metal environment 100, host operating system 114 is owned by a single tenant instead of the cloud service provider. This makes it much more complex for cloud service providers to facilitate uCode updates using hot-upgrade methods for tenant-owned operating system environments, such as illustrated for tenant environment 104. In particular, uCode hot-upgrade utility 118 cannot update uCode using an in-band method in bare metal cloud environment 100.

US 2020/285461 A1 discloses a uCode hot-upgrade method for bare metal cloud deployment and associated apparatus. The uCode hot-upgrade method applies a uCode patch to a firmware storage device through an out-of-band controller. In conjunction with receiving a uCode patch, a uCode upgrade interrupt service is triggered to upgrade uCode for one or more CPUs in a bare-metal cloud platform during runtime of a tenant host operating system using an out-of-bound process.

Ben Hawkes: "Notes on Intel Microcode Updates", 1 March 2013 (2013-03-01), pages 1-11, Retrieved from the Internet:URL:http:// inertiawar.com/microcode/hawkes_intel_microcode.pdf [retrieved on 2022-02-17] discloses an overview of Intel's microcode update mechanism. In particular a binary large object, BLOB, is stored in a memory accessible to the CPU to be updated. Further, the virtual address of the BLOB is written in a model-specific register.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic diagram illustrating a cloud service provider environment employing a bare metal cloud environment include a managed bare metal platform hosting a tenant environment, and further illustrating that an in-band uCode hot-upgrade method is not workable for such an environment;
Figure 2 is a schematic diagram illustrating an out-of-band uCode hot-upgrade method implemented for a bare metal cloud environment, according to one embodiment;
Figure 3 is a diagram of a uCode capsule package, according to one embodiment;
Figure 4 is a diagram illustrating an embodiment of an encapsulation process that produces different uCode capsule package formats including formats with and without authentication information comprising signed certifications;
Figure 5 is a schematic diagram illustrating an embodiment of a uCode hot-upgrade method used to upgrade uCode on one or more CPUs using an out-of-band controller during host OS runtime, according to one embodiment;
Figure 6 is a flowchart illustrating operations and logic for implementing the uCode hot-upgrade method, according to one embodiment;
Figure 7 is a flow diagram illustrating the message/signal flows and associated operations performed during the uCode hot-upgrade, according to one embodiment;
Figure 8 is a block diagram illustrating a high-level view of the uCode hot-upgrade process, according to one embodiment; and
Figure 9 is a schematic diagram of an exemplary bare metal platform architecture on which embodiments disclosed herein may be implemented.

### DETAILED DESCRIPTION

Embodiments of a microcode (uCode) hot-upgrade method for bare metal cloud deployment and associated apparatus configured to implement the method are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

In accordance with aspects of the embodiments disclosed herein, a uCode hot-upgrade method is provided that applies the uCode patch to a one or more CPUs through an out-of-band controller, such as but not limited to a baseboard management controller (BMC). In one aspect, this innovation defines an interrupt service, such as a SMI (System Management Interrupt) service, to upgrade uCode patch to one or more CPUs in the bare-metal managed platform in runtime. The uCode patch is received by the BMC and buffered in memory onboard the BMC. The BMC then triggers an SMI handler to execute uCode update service to perform the uCode hot-upgrade.

This innovation enables cloud service providers to deploy uCode hot-patches to bare metal servers for persistent storage and live-patch without touching the tenant operating system environment. This approach significantly reduces the complexity and cost for cloud customers to deploy uCode patch in bare metal environment. The method is transparent for host operating system and the tenant's applications (meaning performed independent of the host OS) and helps cloud service providers to improve user experiences for tenants while deploying firmware patches for host bare metal systems without explicit interruption to tenant's applications.

An overview of the method deployed for a bare metal cloud environment 200 is shown in Figure 2. Bare metal cloud environment 200 includes a cloud service provider environment 202 and a tenant environment 204. Cloud service provider environment 202 includes a managed platform 206 including one or more host CPUs 208. Cloud service provider environment 202 also includes BIOS firmware 212 and a baseboard management controller (BMC) 213 including BMC firmware 215 and a BMC memory buffer 217. In one embodiment the memory buffer is a shared memory buffer that is shared between the BMC and the host. In another embodiment, all or a portion of BMC memory buffer 217 is a video frame buffer. Tenant environment 204 includes a host operating system 214 on which one or more applications 216 are run. In some deployments, applications 216 may include a Type-2 Hypervisor or VMM hosting one or more VMs, with a respective operating system running on each VM.

As further shown in Figure 2, a uCode hot-upgrade utility 220 is used to perform an out-of-band uCode hot-upgrade through use of BMC 213. As described and illustrated in further detail below, the BMC firmware will kick off an SMI service on a host CPU 208, which will temporarily pause operation of applications running on managed platform 206 (including host OS 214 and application 216 in tenant environment 204 to enable the uCode patch to be installed in one of more host CPUs 208 to upgrade the uCode in those CPU(s).

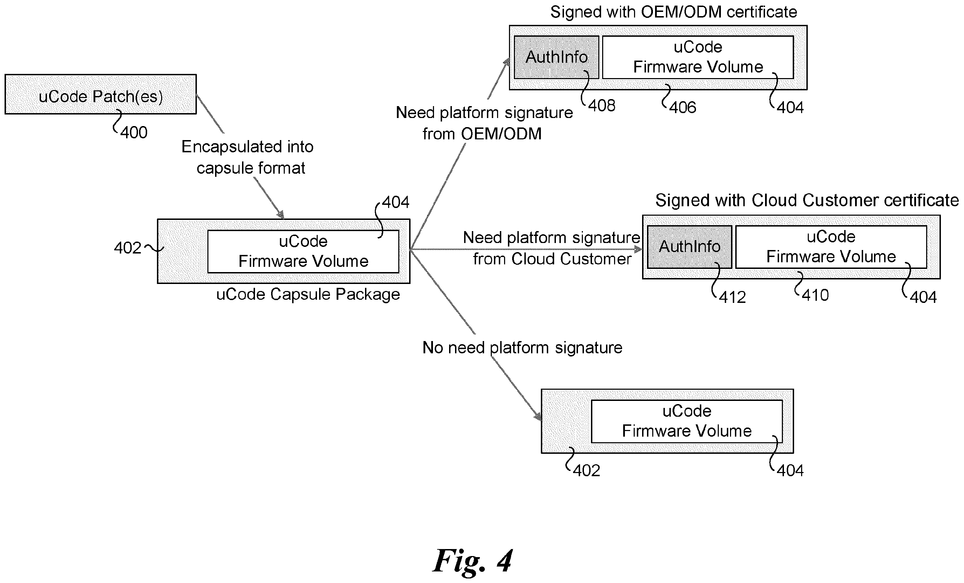

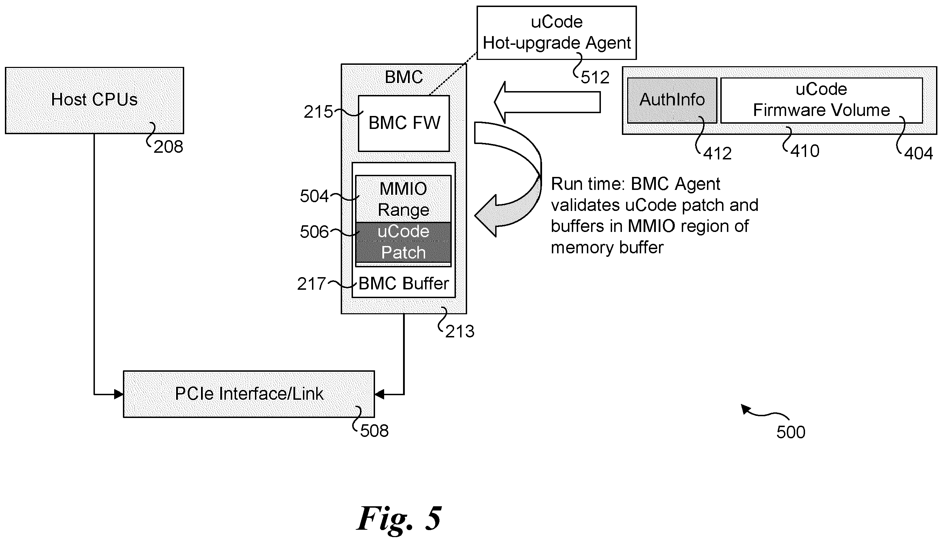

In some embodiments, the uCode patch is encapsulated into a capsule format and a capsule firmware update interface is used to update uCode regions. The capsule format uCode image can be built by either an offline phase or online phase to support flexible integrity check method. Examples of capsule formats and packaging schemes are shown in Figures 4 and 5. In one embodiment, the capsule formats comply with the capsule format defined by an appliable UEFI specification.

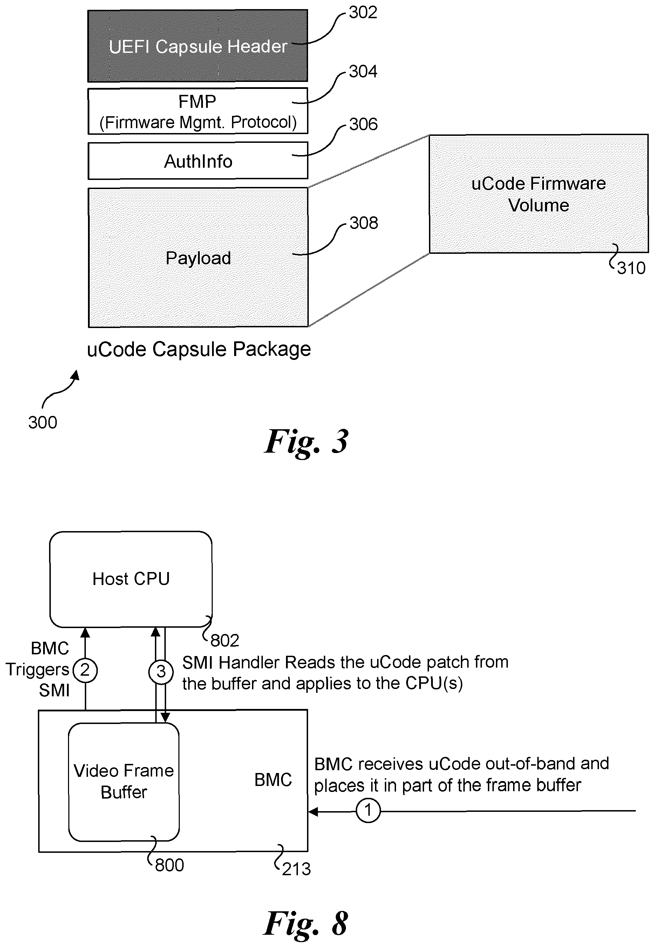

As illustrated in Figure 3, a uCode capsule package 300 includes a UEFI capsule header 302, a firmware management protocol (FPM) field 304, an authentication information (AuthInfo) field 306, and a payload 308 containing a uCode firmware volume 310. In one embodiment, the uCode patch is encapsulated into standard capsule format (*e.g*., uCode capsule package 300) by some system utility to ensure the uCode capsule package for the same CPU SKU (stocking unit - *i.e.,* the same CPU part) is compliant across different platform vendors' BIOS implementations.

An SMI (System Management Interrupt) hander is defined in BIOS to parse the uCode patch from the capsule image. Generally, the uCode capsule package 300 can be dynamically generated either by offline tools from the OEM/ODM/platform vendor or by online tools from the cloud customer configured to support flexible release and variable security check requirements. To support the integrity check for the update image, a signature may be added into AuthInfo field 306; this signature is created using platform credentials from either the OEM/ODM/platform vendor or from cloud customers. For such cases (employing signatures), in one embodiment the SMI handler is configured to check the integrity of the BIOS update image by validating this signature with an internal platform credential.

In some instances, a given uCode release will including multiple uCode patches that are configured to be implemented on the same CPU model while supporting different stepping levels. For example, stepping levels for a CPU may including A0, A1, A2, *etc.* In the cases where changes are more significant, the stepping levels may use a next letter, such as B0, then B1, B2, *etc.* The uCode patches for a CPU model for a given stepping level may differ from uCode patches for that CPU model for another stepping level, thus multiple uCode patches may be included in an update package.

Generally, an OEM/ODM (original equipment manufacturer or original device manufacturer) may create an uCode update package with multiple uCode patches to support multiple stepping levels for a CPU model or produce (*e.g.,* blade server, server module, *etc*.) for which the uCode update package is targeted. For example, a platform vendor may manufacture and sell a given blade server for several years employing the same CPU model, while during that time the stepping versions of the CPU model will have changed. Thus, a uCode update for the blade server may require multiple patches.

In the case of a cloud operator, some uCode update packages may be more targeted to only be implemented on a CPU model with a specific stepping level. In this case, the uCode update package may only include a single uCode patch. In other cases, the cloud operator may generate uCode update packages with multiple uCode patches.

As shown in Figure 4, the encapsulation process starts with one or more uCode patches 400 that are encapsulated into a uCode capsule format 402 including a uCode firmware volume 404. If a platform signature from an OEM or ODM is needed, a uCode capsule format 406 signed with an OEM/ODM certificate is generated, including an AuthInfo field 408 (containing the certificate) and uCode firmware volume 404. If a signature from a cloud customer is needed, a uCode capsule format 410 signed with a cloud customer certificate is generated, including an AuthInfo field 412 (containing the certificate) and uCode firmware volume 404. If no platform signature is needed, uCode capsule package 402 can be provided as is.

### Use of Out-Of-Band Controller to Update uCode in CPU(s) during Runtime

Figure 5 shows a diagram 500 illustrating an embodiment of a uCode hot-upgrade method used to update uCode in one or more host CPUs 208 using an out-of-band controller during host OS runtime. All or a portion of BMC buffer 217 comprises a Memory-Mapped Input-Output (MMIO) range 504 in which a uCode patch 506 is buffered. In one embodiment, BMC 213 is connected to one or more of host CPUs 208 via a Peripheral Component Interconnect Express (PCIe) interface/link 508. BMC 213 is further shown as including a uCode hot-upgrade agent 510, which in one embodiment is implemented via execution of BMC firmware 215.

Prior to performing the uCode hot-upgrade, BMC agent 510 validates the integrity of the uCode update package with internal platform credentials. For example, as discussed above and shown in Figure 4, uCode capsule format 410 is signed with a cloud customer certificate that includes an AuthInfo field 412. The certificate may be validated against credentials that are stored internally in the platform, such as in a secure module or the like (*e.g.,* a trusted platform module (TPM)).

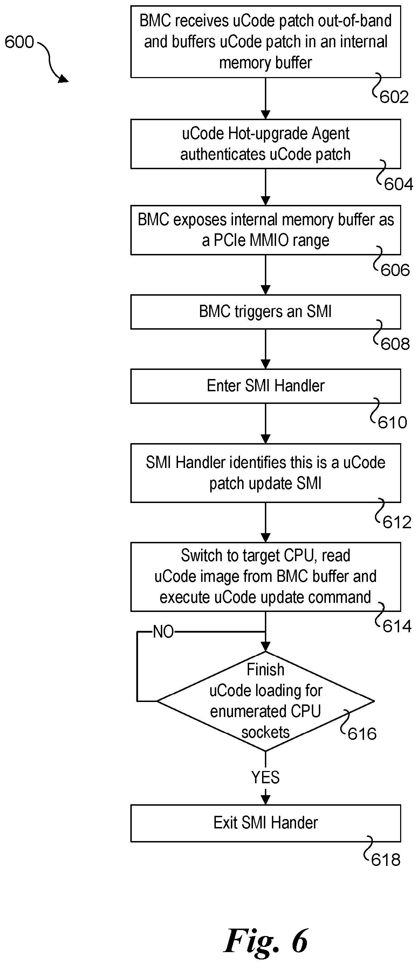

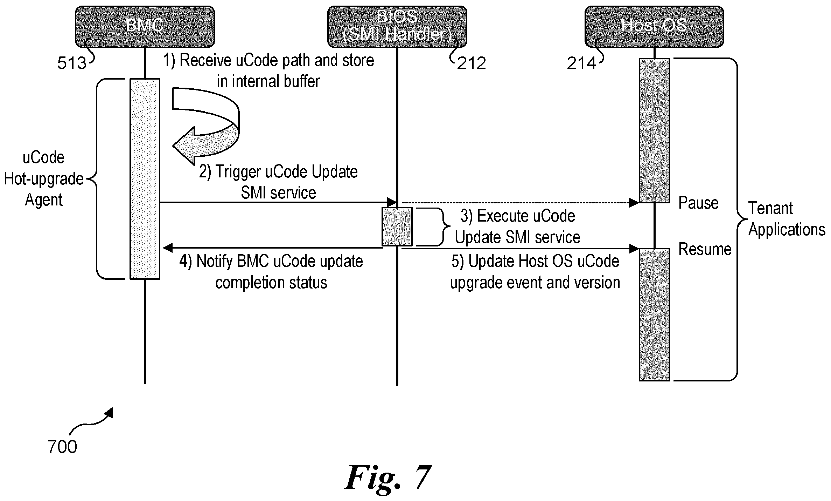

An SMI service in BIOS firmware is defined to implement a uCode hot-upgrade procedure for one or more of CPUs 208, as shown in flowchart 600 of Figure 6 and with further reference to Figure 5, the message flow diagram of Figure 7 and the block diagram of Figure 8. In a block 602, the BMC receives a uCode patch using an out-of-band channel and buffers the uCode path in an internal memory buffer. In one embodiment, the uCode patch is sent from a remote management counsel that is connected to the BMC via an out-of-band channel. In one embodiment the internal memory buffer is a video frame buffer that is repurposed for buffering the uCode patch, such as shown by a video frame buffer 800 in Figure 8. In a block 804, uCode hot-upgrade agent 510 validates the uCode patch in the manner discussed above. The processes proceed if the uCode patch is deemed valid, otherwise the process ends.

In a block 606, the BMC exposes the internal memory buffer as a PCIe Memory MMIO range. In one embodiment the BMC is connected to a host CPU via a PCIe interface *(*e*.g.,* PCIe interface/link 508). The BMC is presented to the host CPU as a PCIe endpoint device. PCIe endpoint devices can expose internal memory resources as MMIO ranges using a standard PCIe mechanism, as is the case in block 606.

In a block 608, the BMC triggers an SMI on host CPU 802 (Figure 8), which is followed by entry of an SMI handler in a block 610. In a block 612 the SMI handler identifies the SMI is a uCode patch update SMI. In a block 614, processing switches to a target CPU that reads the uCode image from the BMC buffer and executes a uCode update command. As depicted by a decision block 616, execution of the uCode update command is repeated to update uCode in one or more enumerated CPU sockets. Upon completion the SMI handler exits in a block 618.

Figure 7 shows a message flow diagram 700 that depicts messages that are exchanged between the uCode hot-upgrade agent on BMC 513, SMI handler 212 (in BIOS) and a host operating system 214. In a first operation '1' the uCode patch is received and stored in an internal memory buffer on the BMC. In a second operation '2' the uCode hot-upgrade agent triggers the uCode update SMI service (implemented by SMI handler 212). Entry into the SMI handler switches execution of the CPU to System Management Mode (SMM), which pauses execution of host OS 214 (along with any applications being hosted by host OS 214). As depicted by a third operation '3', the uCode update SMI service is executed over a brief timeframe to update the uCode one or more CPUs using the uCode patch. Upon completion, SMI handler 212 issues a notification to the uCode hot-upgrade agent of the uCode update completion status. In (substantially) parallel, SMI handler 212 also updates host OS 214 of the uCode upgrade event and version information.

In some embodiments under which multiple stepping version uCode patches are included in an update package, the SMI BIOS code may be configured to filter for only those uCode patches that have a stepping version that matches the stepping version of the processor. Under this approach, providers of uCode update packages can build and send out update package with multiple stepping versions without having to know the particular stepping version that is implemented by each processor for which uCode is to be updated.

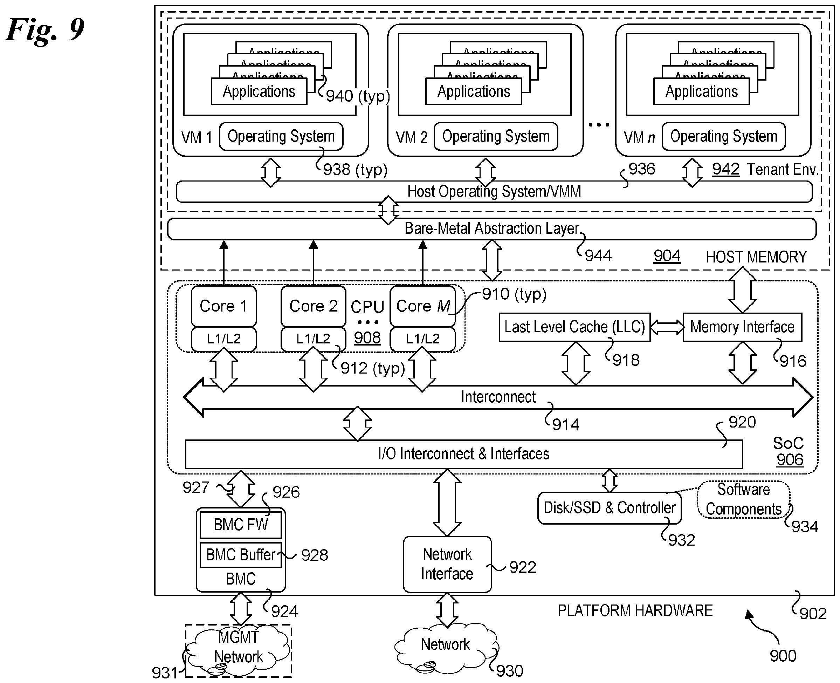

Figure 9 shows an embodiment of a bare metal cloud platform architecture 900 corresponding to a bare metal platform suitable for implementing aspects of the embodiments described herein. Architecture 900 includes a hardware layer in the lower portion of the diagram including platform hardware 902, and a software layer that includes software components running in host memory 904. In one aspect, architecture 900 is configured to implement the uCode patch hot-upgrade method discussed above.

Platform hardware 902 includes a processor 906 having a System on a Chip (SoC) architecture including a central processing unit (CPU) 908 with *M* processor cores 910, each coupled to a Level 1 and Level 2 (L1/L2) cache 912. Each of the processor cores and L1/L2 caches are connected to an interconnect 914 to which each of a memory interface 916 and a Last Level Cache (LLC) 918 is coupled, forming a coherent memory domain. Memory interface is used to access host memory 904 in which various software components are loaded and run via execution of associated software instructions on processor cores 910.

Processor 906 further includes an Input/Output (I/O) interconnect hierarchy, which includes one or more levels of interconnect circuitry and interfaces that are collectively depicted as I/O interconnect & interfaces 920 for simplicity. Various components and peripheral devices are coupled to processor 906 via respective interfaces (not all separately shown), including a network interface 922 and a BMC 924 including BMC firmware 926 and a BMC buffer 928. In the illustrated embodiment, BMC 924 is coupled to SoC 906 via a PCI interface 929. Network interface 922 is connected to a network 930. In some embodiments, BMC 924 is connected to a management network 931 that is separate from network 930. In other embodiments, BMC 924 either is connected to network 930 using a built-in or separate network interface (both not shown) or BMC 924 is configured to communicate with external entities coupled to network 930 via network interface 922.

Platform hardware 902 also includes a disk drive or solid-state disk (SSD) with controller 932 in which software components 934 are stored. Optionally, all or a portion of the software components used to implement the software aspects of embodiments herein may be loaded over a network 930 accessed by network interface 922.

During platform initialization, a current or new uCode image and various UEFI modules (not separately shown) are loaded into host memory 904 and booted, followed loading and initialization of various software components. The software components include a host operating system and a VMM 936 (that would sit above the host operating system but is not shown separately) used to host *n* virtual machines (VMs) VM 1, VM 2 ... VM *n*, each including an operating system 938 on which one or more applications 940 are run. Platform architectures employing containers, such as Docker^{®}-type containers, may be implemented in a similar manner. In addition, non-virtualized computing platforms that only run a single instance of an operating system (e.g., applications run directly on host operating system 936) may also be used.

As further illustrated in Figure 9, the software components in host memory 904 that include host operating system/VMM 936 and above are part of tenant environment 942. Meanwhile, software components depicted as a bare metal abstraction layer 944 are part of the cloud service provide environment. Generally, the cloud service provider environment will provide mechanisms to support separate access to tenant environment 942 and portions of host memory 904 that are used by the cloud service provider. In some embodiments, the bare metal cloud platform hardware and bare metal abstraction layer are part of a trusted computing base (TCB).

For multi-socket bare metal cloud platforms, the platform architecture would be somewhat similar to that shown in Figure 9, but with multiple processors (CPUs), each in its own socket, and socket-to-socket interconnects connecting the sockets.

As used herein, "runtime" and "operating system runtime" refer to an operational phase of a platform following booting of a host operating system. Accordingly, when the host operating system is paused during an out-of-band hot-upgrade process, the host operating system is still in runtime through the process. Moreover, when the host operating system is paused it is unaware of any operations being performed by the CPUs on the bare metal platform and the out-of-band hot-upgrade process provided by the embodiments herein are transparent to the host operating system.

As used herein, "out-of-band" means a communication channel that does not employ communication facilities provided by an operating system, such as a network software stack. As a result, out-of-band communications are implemented separate and apart from communications in the tenant environment involving the host operating system.

In addition to applying uCode patches to CPUs, the teaching and principles disclosed herein may be applied to Other Processing Units (collectively termed XPUs) including one or more of Graphic Processor Units (GPUs) or General Purpose GPUs (GP-GPUs), Tensor Processing Unit (TPU) Data Processor Units (DPUs), Artificial Intelligence (AI) processors or AI inference units and/or other accelerators, FPGAs and/or other programmable logic (used for compute purposes), *etc.* While some of the diagrams herein show the use of CPUs, this is merely exemplary and non-limiting. Generally, any type of XPU may be used in place of a CPU in the illustrated embodiments. Moreover, as used in the following claims, CPUs and all forms of XPUs comprise processing units.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

Italicized letters, such as *'M', 'n', etc.* in the foregoing detailed description are used to depict an integer number, and the use of a particular letter is not limited to particular embodiments. Moreover, the same letter may be used in separate claims to represent separate integer numbers, or different letters may be used. In addition, use of a particular letter in the detailed description may or may not match the letter used in a claim that pertains to the same subject matter in the detailed description.

As discussed above, various aspects of the embodiments herein may be facilitated by corresponding software and/or firmware components and applications. Thus, embodiments of this invention may be used as or to support a software program, software modules, and/or firmware (BIOS), executed upon some form of processor, processing core or embedded logic, a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (*e.g*., a computer). For example, a non-transitory computer-readable or machine-readable storage medium includes any mechanism that provides (*i.e.,* stores and/or transmits) information in a form accessible by a computer or computing machine (*e.g.,* computing device, electronic system, *etc*.), such as recordable/non-recordable media (*e.g*., read only memory (ROM), random access memory (RAM), magnetic disk storage media, optical storage media, flash memory devices, *etc*.). The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

As used herein, a list of items joined by the term "at least one of" can mean any combination of the listed terms. For example, the phrase "at least one of A, B or C" can mean A; B; C; A and B; A and C; B and C; or A, B and C.

The scope of the invention is defined in the appended claims.

## Claims

1. A method, comprising:
during runtime operation of a host operating system on a bare metal platform including one or more processing units on which the host operating system and applications in the tenant environment are executed,
employing an out-of-band microcode (uCode) hot-upgrade process to update firmware uCode for at least one of the one or more processing units, wherein the firmware uCode update comprises a uCode patch that is buffered in memory onboard an out-of-band controller and copied from the memory to the at least one of the one or more processing units.

2. The method of claim 1, wherein the uCode hot-upgrade process is transparent to the host operating system in the tenant environment.

3. The method of claim 1 or 2, further comprising:
triggering, using an interrupt, a uCode update service to execute on a processing unit;
pausing execution of the host operating system;
executing the uCode update service to,
load a uCode patch from a memory buffer on the out-of-band controller;
for each of at least one processing unit,
execute a uCode update command to update the uCode for that processing unit using the uCode path; and
resuming execution of the host operating system following completion of the uCode update service.

4. The method of any of claims 1-3, further comprising:
receiving the uCode patch at the out-of-band controller;
buffering the uCode patch in a memory buffer in the out-of-band controller; and
exposing the memory buffer as a Memory-Mapped Input-Output (MMIO) range to a processing unit.

5. The method of claim 4, further comprising:
executing code on the processing unit to locate the MMIO range and read the uCode patch from the memory buffer in the out-of-band controller; and
performing a hot-upgrade of uCode on the processing unit.

6. The method of claim 5, wherein the code comprises a System Management Interrupt (SMI) handler that implements an uCode update SMI service, further comprising:
triggering an SMI; and
switching an execution mode on the processing unit to a secure execution mode; and
executing the uCode update SMI service to perform the hot-upgrade of the uCode on the processing unit.

7. A bare metal platform, comprising:
one or more host central processing units (CPUs);
a memory, coupled to the one or more CPUs; and
an out-of-band controller, communicatively coupled to at least one host CPU, having an onboard memory buffer,
wherein the bare metal platform is configured to be implemented in a cloud service provider environment and host a tenant environment in which a host operating system and applications are executed on the one or more host CPUs, and wherein the bare metal platform is configured to implement a microcode (uCode) hot-upgrade process using the out-of-band controller to buffer a uCode patch in the onboard memory buffer and update uCode for at least one of the one or more CPUs during runtime operation of the host operating system.

8. The bare metal platform of claim 7, wherein the uCode hot-upgrade process is transparent to the host operating system in the tenant environment.

9. The bare metal platform of claim 7 or 8, wherein the bare metal platform is further configured to:
receive the uCode patch at the out-of-band controller;
validate the uCode patch;
buffer the uCode patch in a memory buffer in the out-of-band controller; and
expose the memory buffer as a Memory-Mapped Input-Output (MMIO) range to a host CPU.

10. The bare metal platform of claim 9, wherein the bare metal platform is further configured to:
execute code on the host CPU to locate the MMIO range and read the uCode patch from the memory buffer in the out-of-band controller; and
perform a hot-upgrade of uCode on the host CPU.

11. The bare metal platform of claim 10, wherein the code comprises a System Management Interrupt (SMI) handler that implements an uCode update SMI service, and wherein the bare metal platform is further configured to:
trigger an SMI;
switch an execution mode on the host CPU to a secure execution mode; and
execute the uCode update SMI service using the secure execution mode to perform the hot-upgrade of the uCode on the host CPU.

12. An out-of-band controller including a memory buffer configured to be implemented on a bare metal platform on which a host operating system and applications in a tenant environment are executed, the bare metal platform provided by a cloud service provider and including one or more host central processing units (CPUs) and an out-of-band controller communicatively coupled to at least one host CPU, wherein the out-of-band controller is configured to:
during runtime operation of the host operating system,
receive a microcode (uCode) patch;
buffer the uCode patch in the memory buffer; and
enable a host CPU to access the uCode patch in the memory buffer.

13. The out-of-band controller of claim 12, wherein the out-of-band controller is a baseboard management controller (BMC) that includes BMC firmware that is executed on the BMC to effect the operations performed by the BMC.

14. The out-of-band controller of claim 12 or 13, further configured to:
expose the memory buffer as a Memory-Mapped Input-Output (MMIO) range to the host CPU.

15. The out-of-band controller of claim 14, further configured to:
enable the host CPU to access the MMIO range when the CPU is operating in a secure execution mode; and
prevent the host CPU from accessing the MMIO range when not operating in the secure execution mode.

## Patentansprüche

1. Verfahren, das Folgendes umfasst:
während des Laufzeitbetriebs eines Host-Betriebssystems auf einer "Bare-Metal-Plattform", die eine oder mehrere Verarbeitungseinheiten enthält, auf denen das Host-Betriebssystem und Anwendungen in der Mieterumgebung ausgeführt werden,
Verwenden eines Außerband-Mikrocode-Hot-Upgrade-Prozesses (uCode-Hot-Upgrade-Prozess), um Firmware-uCode für wenigstens eine der einen oder der mehreren Verarbeitungseinheiten zu aktualisieren, wobei die Firmware-uCode-Aktualisierung einen uCode-Patch enthält, der im internen Speicher eines Außerband-Controllers gepuffert wird und aus dem Speicher in die wenigstens eine der einen oder der mehreren Verarbeitungseinheiten kopiert wird.

2. Verfahren nach Anspruch 1, wobei der uCode-Hot-Upgrade-Prozess für das Host-Betriebssystem in der Mieterumgebung transparent ist.

3. Verfahren nach Anspruch 1 oder 2, das ferner Folgendes umfasst:
Triggern unter Verwendung eines Interrupts der Ausführung eines uCode-Aktualisierungsdienstes auf einer Verarbeitungseinheit; Pausieren der Ausführung des Host-Betriebssystems;
Ausführen des uCode-Aktualisierungsdienstes zum Laden eines uCode-Patch von einem Speicherpuffer auf dem Außerband-Controller;
für jede von wenigstens einer Verarbeitungseinheit Ausführen eines uCode-Aktualisierungsbefehls zum Aktualisieren des uCode für jene Verarbeitungseinheit unter Verwendung des uCode-Pfads; und
Wiederaufnehmen der Ausführung des Host-Betriebssystems nach Abschluss des uCode-Aktualisierungsdienstes.

4. Verfahren nach einem der Ansprüche 1-3, das ferner Folgendes umfasst:
Empfangen des uCode-Patch bei dem Außerband-Controller;
Puffern des uCode-Patch in einem Speicherpuffer in dem Außerband-Controller; und Präsentieren des Speicherpuffers als einen speicherabgebildeten Eingangs/Ausgangs-Bereich (MMIO-Bereich) für eine Verarbeitungseinheit.

5. Verfahren nach Anspruch 4, das ferner Folgendes umfasst:
Ausführen von Code auf der Verarbeitungseinheit, um den MMIO-Bereich zu lokalisieren und um den uCode-Patch aus dem Speicherpuffer in dem Außerband-Controller zu lesen; und
Ausführen eines Hot-Upgrade von uCode auf der Verarbeitungseinheit.

6. Verfahren nach Anspruch 5, wobei der Code einen "System Management Interrupt"-Handler (SMI-Handler) enthält, der einen uCode-Aktualisierungs-SMI-Dienst implementiert, das ferner Folgendes umfasst:
Triggern einer SMI; und
Schalten eines Ausführungsmodus auf der Verarbeitungseinheit zu einem sicheren Ausführungsmodus;
und Ausführen des uCode-Aktualisierungs-SMI-Dienstes, um das Hot-Upgrade des uCode auf der Verarbeitungseinheit auszuführen.

7. "Bare-Metal-Plattform", die Folgendes umfasst:
eine oder mehrere Host-Zentraleinheiten (CPUs);
einen Speicher, der mit der einen oder den mehreren CPUs gekoppelt ist; und
einen Außerband-Controller, der mit wenigstens einer Host-CPU, die einen internen Speicherpuffer besitzt, kommunikationstechnisch gekoppelt ist,
wobei die "Bare-Metal-Plattform" konfiguriert ist, in einer Cloud-Dienstanbieterumgebung implementiert zu werden und eine Mieterumgebung, in der ein Host-Betriebssystem und Anwendungen auf der einen oder den mehreren Host-CPUs ausgeführt werden, zu hosten, und wobei die "Bare-Metal-Plattform" konfiguriert ist, einen Mikrocode-Hot-Upgrade-Prozess (uCode-Hot-Upgrade-Prozess) unter Verwendung des Außerband-Controllers, um einen uCode-Patch in dem internen Speicherpuffer zu puffern, zu implementieren und uCode für wenigstens eine der einen oder der mehreren CPUs während eines Laufzeitbetriebs des Host-Betriebssystems zu aktualisieren.

8. "Bare-Metal-Plattform" nach Anspruch 7, wobei der uCode-Hot-Upgrade-Prozess für das Host-Betriebssystem in der Mieterumgebung transparent ist.

9. "Bare-Metal-Plattform" nach Anspruch 7 oder 8, wobei die "Bare-Metal-Plattform" ferner konfiguriert ist zum:
Empfangen des uCode-Patch bei dem Außerband-Controller;
Validieren des uCode-Patch;
Puffern des uCode-Patch in einem Speicherpuffer in dem Außerband-Controller; und
Präsentieren des Speicherpuffers als einen speicherabgebildeten Eingangs/Ausgangs-Bereich (MMIO-Bereich) für eine Host-CPU.

10. "Bare-Metal-Plattform" nach Anspruch 9, wobei die "Bare-Metal-Plattform" ferner konfiguriert ist zum:
Ausführen von Code auf der Host-CPU, um den MMIO-Bereich zu lokalisieren und um den uCode-Patch aus dem Speicherpuffer in dem Außerband-Controller zu lesen; und Ausführen eines Hot-Upgrade von uCode auf der Host-CPU.

11. "Bare-Metal-Plattform" nach Anspruch 10, wobei der Code einen "System Management Interrupt"-Handler (SMI-Handler) enthält, der einen uCode-Aktualisierungs-SMI-Dienst implementiert, und wobei die "Bare-Metal-Plattform" ferner konfiguriert ist zum:
Triggern einer SMI;
Schalten eines Ausführungsmodus auf der Host-CPU zu einem sicheren Ausführungsmodus; und
Ausführen des uCode-Aktualisierungs-SMI-Dienstes unter Verwendung des sicheren Ausführungsmodus, um das Hot-Upgrade des uCode auf der Host-CPU auszuführen.

12. Außerband-Controller, der einen Speicherpuffer enthält und konfiguriert ist, auf einer "Bare-Metal-Plattform" implementiert zu werden, auf der ein Host-Betriebssystem und Anwendungen in einer Mieterumgebung ausgeführt werden, wobei die "Bare-Metal-Plattform" durch einen Cloud-Dienstanbieter bereitgestellt wird und eine oder mehrere Host-Zentraleinheiten (CPUs) und einen Außerband-Controller, der mit wenigstens einer Host-CPU kommunikationstechnisch gekoppelt ist, enthält, wobei der Außerband-Controller konfiguriert ist:
während des Laufzeitbetriebs des Host-Betriebssystems einen Mikrocode-Patch (uCode-Patch) zu empfangen;
den uCode-Patch in dem Speicherpuffer zu puffern; und
eine Host-CPU für den Zugriff auf den uCode-Patch in dem Speicherpuffer freizugeben.

13. Außerband-Controller nach Anspruch 12, wobei der Außerband-Controller ein "Baseboard Management Controller" (BMC) ist, der BMC-Firmware enthält, die auf dem BMC ausgeführt wird, um die durch den BMC ausgeführten Operationen zu bewirken.

14. Außerband-Controller nach Anspruch 12 oder 13, der ferner konfiguriert ist zum:
Präsentieren des Speicherpuffers als einen speicherabgebildeten Eingangs/Ausgangs-Bereich (MMIO-Bereich) für die Host-CPU.

15. Außerband-Controller nach Anspruch 14, der ferner konfiguriert ist zum:
Freigeben der Host-CPU für den Zugriff auf den MMIO-Bereich, wenn die CPU in einem sicheren Ausführungsmodus arbeitet; und
Verhindern, dass die Host-CPU auf den MMIO-Bereich zugreift, wenn sie nicht in dem sicheren Ausführungsmodus arbeitet.

## Revendications

1. Procédé comprenant les étapes suivantes :
pendant l'exécution d'un système d'exploitation hôte sur une plateforme nue comprenant une ou plusieurs unités de traitement sur lesquelles le système d'exploitation hôte et les applications de l'environnement locataire sont exécutés,
utiliser un processus de mise à niveau à chaud du microcode hors bande (uCode) pour mettre à jour l'uCode du micrologiciel pour au moins une des une ou plusieurs unités de traitement, la mise à niveau de l'uCode du micrologiciel comprenant un correctif uCode qui est mis en mémoire tampon dans un contrôleur hors bande et copié depuis la mémoire vers au moins une des une ou plusieurs unités de traitement.

2. Procédé selon la revendication 1, dans lequel le processus de mise à niveau à chaud de l'uCode est transparent pour le système d'exploitation hôte dans l'environnement du locataire.

3. Procédé selon la revendication 1 ou la revendication 2, comportant en outre les étapes suivantes :
déclencher, à l'aide d'une interruption, un service de mise à niveau de l'uCode à exécuter sur une unité de traitement ; mettre en pause l'exécution du système d'exploitation hôte ;
exécuter le service de mise à niveau de l'uCode pour charger un patch uCode à partir d'une mémoire tampon sur le contrôleur hors bande ;
pour chacune d'au moins une unité de traitement,
exécuter une commande de mise à niveau de l'uCode pour mettre à jour l'uCode pour cette unité de traitement en utilisant le chemin de l'uCode ; et
reprendre l'exécution du système d'exploitation hôte après l'achèvement du service de mise à niveau de l'uCode.

4. Procédé selon l'une quelconque des revendications 1 à 3, comprenant en outre les étapes suivantes :
recevoir le patch uCode au niveau du contrôleur hors bande ;
mettre le patch uCode dans une mémoire tampon du contrôleur hors bande ; et exposer la mémoire tampon en tant que plage d'entrée-sortie mappée en mémoire (MMIO) à une unité de traitement.

5. Procédé selon la revendication 4, comprenant en outre les étapes suivantes :
exécuter un code sur l'unité de traitement pour localiser la plage MMIO et lire le correctif uCode dans la mémoire tampon du contrôleur hors bande ; et
effectuer une mise à niveau à chaud de l'uCode sur l'unité de traitement.

6. Procédé selon la revendication 5, dans lequel le code comprend un gestionnaire d'interruptions SMI (System Management Interrupt) qui met en œuvre un service SMI de mise à niveau d'uCode, comprenant en outre les étapes suivantes :
déclencher une SMI ; et
passer d'un mode d'exécution sur l'unité de traitement à un mode d'exécution sécurisé ; et exécuter le service SMI de mise à niveau de l'uCode pour effectuer la mise à niveau à chaud de l'uCode sur l'unité de traitement.

7. Plateforme nue, comprenant :
une ou plusieurs unités centrales de traitement hôtes (CPU) ;
une mémoire, couplée aux une ou plusieurs unités centrales de traitement ; et
un contrôleur hors bande, couplé de manière communicative à au moins une unité centrale de traitement hôte, lequel est doté d'une mémoire tampon embarquée,
dans laquelle la plateforme nue est configurée pour être mise en œuvre dans un environnement de fournisseur de services en nuage et héberger un environnement de locataire dans lequel un système d'exploitation hôte et des applications sont exécutés sur les une ou plusieurs unités centrales hôtes, et dans laquelle la plateforme nue est configurée pour mettre en œuvre un processus de mise à niveau à chaud du microcode (uCode) à l'aide du contrôleur hors bande pour mettre en mémoire tampon un correctif uCode dans la mémoire tampon embarquée et mettre à jour l'uCode pour au moins une des une ou plusieurs unités centrales hôtes pendant l'exécution du système d'exploitation hôte.

8. Plateforme nue selon la revendication 7, dans laquelle le processus de mise à niveau à chaud de l'uCode est transparent pour le système d'exploitation hôte dans l'environnement du locataire.

9. Plateforme nue selon la revendication 7 ou la revendication 8, la plateforme nue étant en outre configurée pour :
recevoir le correctif uCode au niveau du contrôleur hors bande ;
valider le patch uCode ;
mettre en mémoire tampon le patch uCode dans une mémoire tampon du contrôleur hors bande ; et
exposer la mémoire tampon en tant que plage d'entrée-sortie mappée en mémoire (MMIO) à un processeur hôte.

10. Plateforme nue selon la revendication 9, la plateforme nue étant en outre configurée pour :
exécuter un code sur l'unité centrale hôte pour localiser la plage MMIO et lire le correctif uCode dans la mémoire tampon du contrôleur hors bande ; et
effectuer une mise à niveau à chaud de l'uCode sur l'unité centrale hôte.

11. Plateforme nue selon la revendication 10, dans laquelle le code comprend un gestionnaire d'interruptions SMI (System Management Interrupt) qui met en œuvre un service SMI de mise à niveau d'uCode, et la plateforme nue étant en outre configurée pour :
déclencher une SMI ;
basculer d'un mode d'exécution sur l'unité centrale hôte vers un mode d'exécution sécurisé ; et
exécuter le service SMI de mise à niveau de l'uCode en utilisant le mode d'exécution sécurisé pour effectuer la mise à niveau à chaud de l'uCode sur l'unité centrale hôte.

12. Contrôleur hors bande comprenant une mémoire tampon configurée pour être mise en œuvre sur une plate-forme nue sur laquelle un système d'exploitation hôte et des applications dans un environnement locataire sont exécutés, la plate-forme nue étant fournie par un fournisseur de services en nuage et comprenant une ou plusieurs unités centrales de traitement hôtes (CPU) et un contrôleur hors bande couplé de manière communicative à au moins une CPU hôte, le contrôleur hors bande étant configuré pour :
pendant l'exécution du système d'exploitation hôte,
recevoir un correctif de microcode (uCode) ;
mettre en mémoire tampon le correctif uCode ; et
permettre à une unité centrale hôte d'accéder au correctif uCode dans la mémoire tampon.

13. Contrôleur hors bande selon la revendication 12, dans lequel le contrôleur hors bande est un contrôleur de gestion de carte de base (BMC) qui comprend un micrologiciel BMC exécuté sur le BMC pour effectuer les opérations réalisées par le BMC.

14. Contrôleur hors bande selon la revendication 12 ou la revendication 13, configuré en outre pour :
exposer la mémoire tampon en tant que plage d'entrée-sortie mappée en mémoire (MMIO) au processeur hôte.

15. Contrôleur hors bande selon la revendication 14, configuré en outre pour :
permettre à l'unité centrale hôte d'accéder à la plage MMIO lorsque l'unité centrale fonctionne dans un mode d'exécution sécurisé ; et
empêcher l'unité centrale hôte d'accéder à la plage MMIO lorsqu'elle ne fonctionne pas en mode d'exécution sécurisé.
